# EUROPEAN PATENT APPLICATION

(11) **EP 3 130 795 A1**
(43) Date of publication of application: **15.02.2017**
(21) Application number: 16250012.8
(22) Date of filing: 05.08.2016
(51) Int. Cl.: F03B 13/18, F03B 17/02

(54) **WAVE-DRIVEN POWER GENERATION SYSTEM**

(30) Priority: 11.08.2015 TW 104126052
(71) Applicant: Peng, Sheng-Po, Miaoli County (TW); Peng, Sheng-Da, Miaoli County (TW); Peng, Chen-Chen, Miaoli County (TW)
(72) Inventor: Peng, Sheng-Po, Toufen Township Miaoli County (TW); Peng, Sheng-Da, Toufen Township Miaoli County (TW)
(74) Representative: Whitaker, Iain Mark

(57) **Abstract**

A wave-driven power generation system that uses a motor reducer to turn a rocker bar in biasing float boards alternatively up and down, causing creation of water waves in water reservoirs and simultaneously driving transmission mechanisms to move power generators through inertia wheel sets, and thus, the power generators are driven to generate electricity.

## Description

### BACKGROUND OF THE INVENTION

### 1. Field of the Invention

The present invention relates to power generation technology, and more particularly to a wave-driven power generation system, which uses a motor reducer to bias float boards in water reservoirs for creating water waves and driving transmission gearboxes to transfer rotary driving force through respective inertial wheel sets to respective power generating units for generating electricity.

### 2. Description of the Related Art

EP2759697 disclose different forms of wave-driven power generation systems. These prior art designs commonly use a low power consumption motor reducer to move wave-making barrels in water reservoirs for creating water waves, causing float boards to move a transmission gearbox for transferring rotary driving force through an inertial wheel set to a power generating unit in generating electricity. According to these prior art designs, the float boards are not directly driven by the motor reducer, and thus, the kinetic energy produced by the float boards is limited. Further, each rocker bar can simply be used with one respective wave-making barrel and one respective float board to move the water in one respective water reservoir, limiting the efficiency. Therefore, there is still room for improvement.

### SUMMARY OF THE INVENTION

The present invention has been accomplished under the circumstances in view. It is the main object of the present invention to provide a wave-driven power generation system, which enables a rocker bar to move multiple float boards alternatively up and down in a direct manner in creating water waves in multiple water reservoirs, causing float boards to rotate respective transmission gearboxes for the transfer of the rotary driving force through respective inertial wheel sets to respective power generating units, and therefore each power generating unit can effectively generate electricity with less power consumption.

It is another object of the present invention to provide a wave-driven power generation system, which enables one single rocker bar to bias multiple float boards in multiple water reservoirs, and thus, the installation space of the wave-driven power generation system can be minimized.

It is still another object of the present invention to provide a wave-driven power generation system, which is free from geometrical limitations, less expensive for a wide range of applications and in line with the principles of environmental protection, and, which does not cause pollution or produce waste materials and allows repeated use of the supplied water.

### BRIEF DESCRIPTION OF THE DRAWING

Fig. 1 is a schematic sectional side view of a part of a wave-driven power generation system in accordance with the present invention.
Fig. 2 is a schematic plain view of a part of the present invention, illustrating the structural arrangement of the rocker bar driving mechanism.
Fig. 3 is a schematic top plain view of the present invention, illustrating the mounting arrangement of the bracket, drag bars, float boards, transmission gearboxes and power generation units.
Fig. 4 is an enlarged view of a part of Fig. 3.

### DETAILED DESCRIPTION OF THE INVENTION

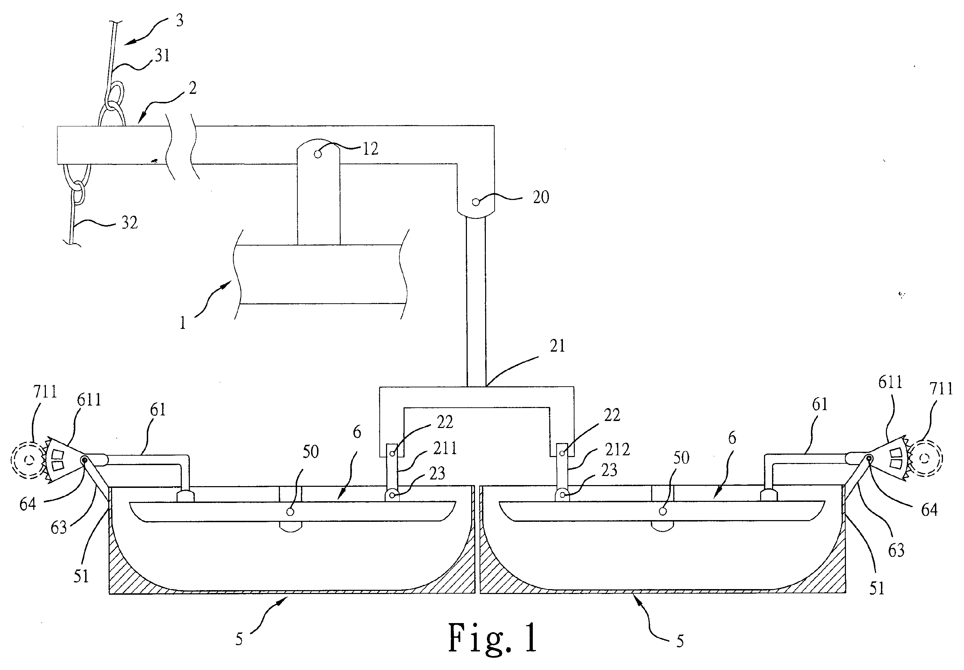

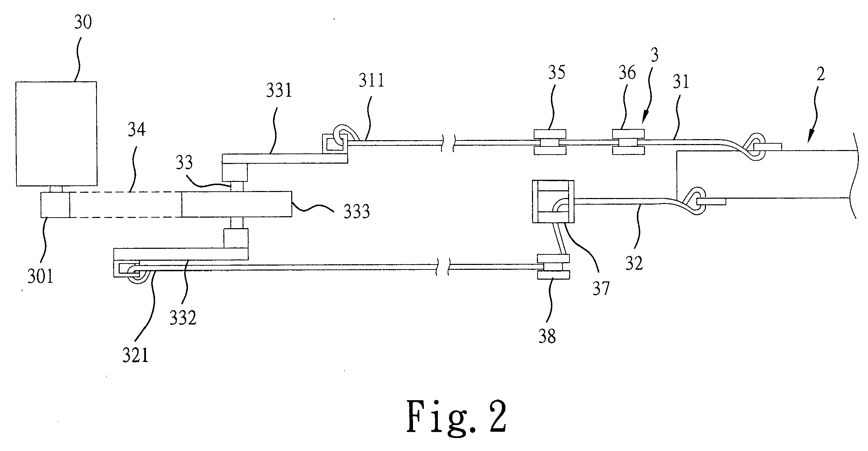

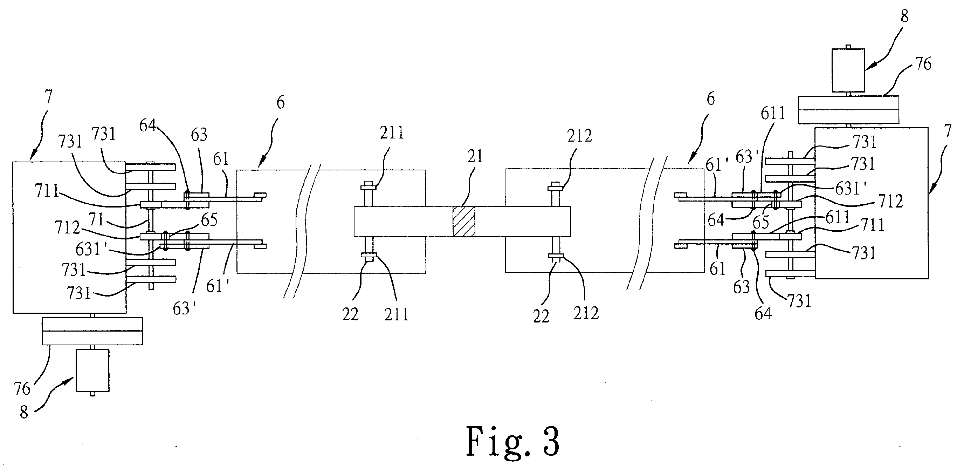

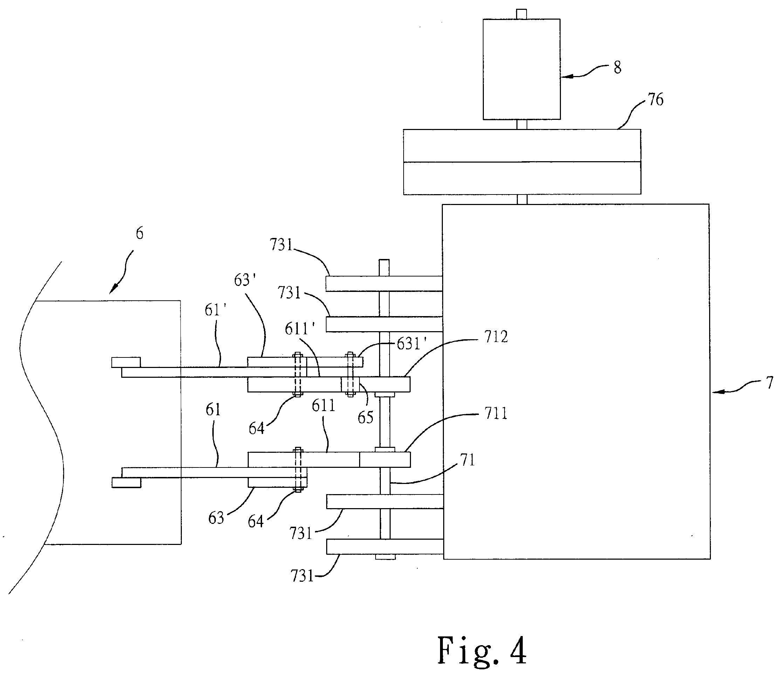

Referring to Figs. 1-4, a wave-driven power generation system in accordance with the present invention is shown. The wave-driven power generation system comprises:
an upright support frame 1 having a bottom end thereof fixedly fastened to the ground or a floor in a building or water reservoir **5** and an opposing top end thereof spaced above the ground or floor at a predetermined distance and provided with a first pivot connection member **12;**
a rocker bar **2** pivotally coupled to the first pivot connection member **12** of the upright support frame **1** and alternatively biasable up and down, comprising a second pivot connection member **20** at one end thereof;
a bracket **21** pivotally coupled to the second pivot connection member **20** of the rocker bar **2,** having third pivot connection members **22** respectively provided at opposite ends thereof;;
a plurality of drag bars **211,212** having respective top ends thereof respectively coupled to the respective third pivot connection members **22** of the bracket **21** and respective opposing bottom ends thereof provided with respective fourth pivot connection members **23;**
a rocker bar driving mechanism **3** adapted for biasing the rocker bar **2** relative to the upright support frame **1,** comprising a motor reducer **30,** a drive wheel **301** made in the form of a chainwheel or belt wheel coupled to and rotatable by the motor reducer **30,** a driven wheel **333** made in the form of a chainwheel or belt wheel, a transmission member **34** made in the form of a chain or belt and coupled between the drive wheel **301** and the driven wheel **333,** a crankshaft **33** axially affixed to the center of the driven wheel **333,** a front crank **331** and a rear crank **332** respectively pivotally connected to two opposite ends of the crankshaft **33** and disposed at two opposite sides relative to the driven wheel **333,** two steel ropes **31,32** respectively connected with respective one ends thereof to opposing top and bottom sides of an opposing end of the rocker bar **2** and respectively connected with respective opposing ends **311,321** thereof to the front crank **331** and the rear crank **332,** and a plurality of pulleys **35,36,37,38** arranged to support and guide the two steel ropes **31,32** and to control their tension;
a plurality of, for example, two water reservoirs **5** arranged adjacent to each other, each having a fifth pivot connection member **50** located therein at the center at a suitable elevation and holding a proper amount of water over 2/3 of the capacity thereof;
a plurality of first and second support bars **63,63'** (see Fig. 3) respectively mounted at respective outer peripheral walls **51** of the water reservoirs 5, each second support bar **63'** having an extension portion **631';**
a driven gear **65** pivotally mounted at the extension portion **631'** of each second support bar **63';**
a plurality of sixth pivot connection members **64** respectively pivotally mounted at the first support bars **63** and the second support bars **63'**;
a first gear wheel **611** fixedly mounted at the sixth pivot connection member **64** at each first support bar **63;**
a second gear wheel **611'** fixedly mounted at the sixth pivot connection member **64** at each second support bar **63'** and meshed with the driven gear **65** at the respective second support bar **63';**
a plurality of, for example, two float boards **6** respectively pivotally supported on the fifth pivot connection members **50** of the water reservoirs **5** in a balanced condition and respectively kept in contact with the water in the respective water reservoirs 5, having respective one ends thereof respectively pivotally coupled to the fourth pivot connection members **23** of the drag bars **211,212;**
a plurality of first and second connection rods **61,61'** respectively fixedly connected with respective one ends thereof to respective opposite ends of the float boards **6** (see FIGS. 1, 3 and 4) and respective opposite ends thereof respectively pivotally connected to respective first and second gear wheels **611,611'** by the respective sixth pivot connection members **64** at the respective first and second support bars **63,63'** (see FIG. 23) such that the float boards **6** are drivable by the drag bars **211,212** to turn about the respective fifth pivot connection members **50** of the water reservoirs **5** in moving the water in the respective water reservoirs **5;**
a driven shaft **71** respectively disposed corresponding to each float board **6;**
a first unidirectional ratchet wheel **711** mounted at each driven shaft **71** and meshed with one respective first gear wheel **611;**
a second unidirectional ratchet wheel **712** mounted at each driven shaft **71** and meshed with one respective driven gear **65** (see FIGS. 3 and 4);
at least one transmission gearbox **7;**
at least one transmission chain wheel or belt wheel **731** respectively coupled between the at least one transmission gearbox **7** and the at least one driven shaft **71** (see FIGS. 3 and 4);
at least one power generation unit **8;** and
at least one inertia wheel set **76** respectively coupled between the at least one transmission gearbox **7** and the at least one power generation unit **8** for driving the at least one power generation unit **8** to generate electricity.

Thus, when the motor reducer 30 is started to rotate the drive wheel **301,** the driven wheel **333** is rotated by the drive wheel **301** via the transmission member **34,** and thus, the crankshaft **33** is rotated with the driven wheel **333,** driving the front crank **331** and the rear crank **332** to alternatively pull the steel ropes **31,32** over the pulleys **35,36,37,38** and to further bias the rocker bar **2** relative to the upright support frame **1.** During oscillation motion of the rocker bar **2** relative to the upright support frame **1,** the bracket **21** is driven by the rocker bar **2** to move the drag bars **211,212** up and down. At this time, the float boards **6** are driven to turn about the respective fifth pivot connection members **50** of the water reservoirs **5** in moving the water in the respective water reservoirs **5,** thereby making waves the respective water reservoir **5.** At the same time, the first and second connection rods **61** and **61'** are forced by the float boards **6** to rotate the respective first gear wheel **611** and second gear wheel **611'** respective to the associating first support bar **63** and second support bar **63',** and thus the respective first unidirectional ratchet wheel **711** and second unidirectional ratchet wheel **712** are driven by the respective first gear wheel **611** and second gear wheel **611**' to rotate the respective driven shaft **71.** During rotation of the driven shaft **71,** the respective at least one transmission chain wheel or belt wheel **731** is driven to rotate the respective transmission gearbox **7,** enabling the rotary driving force to be transferred through the respective at least one inertia wheel set **76** to the respective power generation unit **8,** causing the respective power generation unit **8** to generate electricity. When the float boards **6** are being driven to turn about the respective fifth pivot connection members **50** of the water reservoirs **5** in moving the water in the respective water reservoirs **5.**

Further, the water reservoirs **5** can be made of high-strength metal, high-strength plastics, cement, cement mixture, or any other high-strength material, in the shape of a circular, rectangular or multilateral drum or water pool, or a top-open water container. Further, the amount of water contained in each water reservoir 5 is preferably above 2/3 of its overall capacity.

Further, as shown in Fig. 3 and Fig. 4, when the first and second connection rods **61** and **61**'are forced by the respective float boards **6** to rotate the respective driven shafts **71,** the respective transmission chain wheels or belt wheels **731** are driven to rotate the respective transmission gearboxes **7,** enabling the rotary driving force to be transferred through the respective inertia wheel sets **76** to the respective power generating units **8,** driving the respective power generating units **8** to generate electricity. In the application example shown in FIG. 3, 4 each float board **6** is arranged for rotating one respective transmission gearbox **7,** enabling the rotary driving force to be transferred through one respective inertia wheel set **76** to one respective power generating unit **8.**

In conclusion, the invention provides a wave-driven power generation system that has advantages and features as follows:
1. Simply providing electric power to the motor reducer 30, the rocker bar **2** can be turned to move multiple float boards **6** alternatively up and down in creating water waves in multiple water reservoirs **5,** causing the float boards **6** to rotate respective transmission gearboxes **7** for the transfer of the rotary driving force through respective inertial wheel sets **76** to respective power generating units **8,** and therefore each power generating unit **8** can effectively generate electricity with less power consumption.
2. One single rocker bar **2** can bias multiple float boards **6** in multiple water reservoirs **5,** and thus, the installation space of the wave-driven power generation system can be minimized.
3. The wave-driven power generation system is free from geometrical limitations, and does not cause pollution or produce waste materials. Further, the water contained in each water reservoir **5** can be repeatedly used. Therefore, the wave-driven power generation system is in line with the principles of environmental protection. When compared to solar or wind-driven power generation systems, the wave-driven power generation system of the invention is less expensive for a wide range of applications.

## Claims

1. A wave-driven power generation system, comprising:
an upright support frame fixedly fastened to a floor;
an upright support frame having a bottom end thereof fixedly fastened to a floor and an opposing top end thereof spaced above the ground or floor at a predetermined distance and provided with a first pivot connection member;
a rocker bar pivotally coupled to said first pivot connection member of said upright support frame and alternatively biasable up and down, said rocker bar comprising a second pivot connection member at one end thereof;
a bracket pivotally coupled to said second pivot connection member of said rocker bar, said bracket comprising a plurality of third pivot connection members respectively provided at opposite ends thereof;
a plurality of drag bars having respective top ends thereof respectively coupled to respective said third pivot connection members of said bracket and respective opposing bottom ends thereof provided with respective fourth pivot connection members;
a rocker bar driving mechanism adapted for biasing said rocker bar relative to said upright support frame, said rocker bar driving mechanism comprises a motor reducer, a drive wheel coupled to and rotatable by said motor reducer, a driven wheel, a transmission member coupled between said drive wheel and said driven wheel, a crankshaft axially affixed to the center of said driven wheel, a front crank and a rear crank respectively pivotally connected to two opposite ends of said crankshaft and disposed at two opposite sides relative to said driven wheel, two steel ropes respectively connected with respective one ends thereof to opposing top and bottom sides of an opposing end of said rocker bar and respectively connected with respective opposing ends thereof to said front crank and said rear crank, and a plurality of pulleys arranged to support and guide said two steel ropes;
a plurality of water reservoirs, each said water reservoir comprising a fifth pivot connection member located therein at the center at a predetermined elevation and holding a predetermined amount of water over 2/3 of the capacity thereof;
a plurality of first and second support bars respectively mounted at respective outer peripheral walls of said water reservoirs, each said second support bar comprising an extension portion;
a driven gear pivotally mounted at said extension portion of each said second support bar;
a plurality of sixth pivot connection members respectively pivotally mounted at said first support bars and said second support bars;
a first gear wheel fixedly mounted at the sixth pivot connection member at each said first support bar;
a second gear wheel fixedly mounted at the sixth pivot connection member at each said second support bar and meshed with the driven gear at the respective said second support bar;
a plurality of float boards respectively pivotally supported on said fifth pivot connection members of said water reservoirs in a balanced condition and respectively kept in contact with the water in the respective said water reservoirs, said float board having respective one ends thereof respectively pivotally coupled to said fourth pivot connection members of said drag bars;
a plurality of first and second connection rods respectively fixedly connected with respective one ends thereof to respective opposite ends of said float boards and respective opposite ends thereof respectively pivotally connected to respective said first and second gear wheels by the respective said sixth pivot connection members at the respective said first and second support bars;
a driven shaft respectively disposed corresponding to each said float board;
a first unidirectional ratchet wheel mounted at each said driven shaft and meshed with one respective said first gear wheel;
a second unidirectional ratchet wheel mounted at each said driven shaft and meshed with one respective said driven gear;
at least one transmission gearbox;
at least one transmission wheel respectively coupled between said at least one transmission gearbox and said at least one driven shaft;
at least one power generation unit; and
at least one inertia wheel set respectively coupled between said at least one transmission gearbox and said at least one power generation unit for driving said at least one power generation unit to generate electricity.
